# EUROPEAN PATENT APPLICATION

(11) **EP 4 243 346 A1**
(43) Date of publication of application: **13.09.2023**
(21) Application number: 22305280.4
(22) Date of filing: 11.03.2022
(51) Int. Cl.: H04L 9/40, H04L 9/06, H04L 9/08, H04L 9/32, H04W 12/041, H04W 12/30, G06F 11/22

(54) **A METHOD FOR TESTING A TERMINAL COMPRISING A NON-REMOVABLE SECURE ELEMENT COMPRISING A NAA**

(71) Applicant: Thales Dis France SAS, 92190 Meudon (FR)
(72) Inventor: PHAN, Ly-Thanh, 13705 LA CIOTAT (FR); COLLET, Herve, 13705 LA CIOTAT (FR); DANY, Vincent, 13705 LA CIOTAT (FR); PAULIAC, Mireille, 13705 LA CIOTAT (FR)
(74) Representative: Scheer, Luc

(57) **Abstract**

The invention concerns a method for testing a terminal comprising a non-removable secure element comprising a NAA, the method comprising triggering by the operating system of the secure element an applet of the secure element thanks to events if the applet has been registered to the events, the events comprising commands sent from the terminal to the non-removable secure element,
wherein it comprises ciphering the logged information provided in the test events, the ciphering being realized with a key K_ENC derived from the long-term network authentication key K of the NAA.

## Description

The present invention concerns telecommunications in cellular networks and more particularly non-removable secure elements, like integrated UICCs or embedded UICCs.

A secure element may be embodied in various form factors such as a smart card, an embedded UICC or an integrated UICC.

The traditional smart card form factor is generally a physically removable (from a card reader) and that is in the form of e.g. a SIM card or a Credit Card.

An embedded UICC is a non-removable secure element that is soldered on an electronic board comprised in such a terminal.

An integrated UICC is a non-removable secure element that has the particularity of being combined in a System-on-Chip (as described by GSMA in:
https://data.gsmaintelligence.com/api-web/v2/research-file-download?id=28999708&file=The%20future%200f%20the%20SIM%20potential%20market%20 and%20technology%20implications%20for%20the%20mobile%20ecosystem.pdf) processor of a terminal like for example a smartphone or an loT terminal.

On a secure element one or more Network Access Application (NAA) such as a USIM may be installed. It is generally accepted that, when such NAA is installed or executing on
- a smart card, it will be called indifferently either rSIM or rUICC
- an embedded UICC, it will be called indifferently either eSIM or eUICC
- an integrated UICC, it will be called indifferently either iSIM or iUICC

Both integrated UICC and embedded UICC are called nrUICC for non-removable UICC. More precisely, the invention concerns the security of the test of a terminal (a.k.a. ME) comprising a non-removable secure element (nrUICC).

The test of a terminal is done during development phase (where the non-removable secure element is present in the terminal) or later on in a factory (where the terminal is tested), before the terminal being sent to a retailer. It can also happen for maintenance purposes. This test has the purpose to verify that the terminal has a normal behavior. It can also happen during the certification phase of the terminal. The purpose of the test is to verify that the terminal is conformed to a test specification (e.g. specified in GCF, by a mobile network operator or private enterprise).

In the state of the art, with removable secure elements (rUICCs), an application acting as a spy is installed by means of electronic probes positioned on the physical interface between the modem (baseband) of the terminal (ME) and the rUICC. This application is integrated in a test equipment that logs the commands sent from the terminal to the rUICC. These commands for tests are for example Read command, Authenticate command,...

The terminal is certified and compliant to a standard or recommendation, typically 3GPP, if the commands, during the tests, are correctly (standard definition) sent from the terminal (ME) to the rUICC.

This way of testing a rUICC is however difficult to implement when the secure element is non-removable since it is deeply integrated in the terminal.

For the certification of a 3GPP terminal equipped with a non-removable secure element, new secure element Javacard test APIs are defined in order for an applet on-boarded in the secure element, registered to test events part of this API, to be able to log the commands sent by the ME to the secure element (e.g. READ command, AUTHENTICATE command, etc).

An API exposes an accessible interface of a code that enables two software programs to communicate with each other via that software interface (API).

So, this solution consists in installing an applet (using a test API) in the non-removable secure element. The OS (Operating System) of the secure element triggers the applet thanks to this event if the applet has been registered on this event. Then the applet uses methods from secure element test API to retrieve the command sent from the terminal to the eUICC or iUICC.

The problem with this solution is that it is not secure: The test API (and associated events) can accidentally or maliciously remain available in the OS of the nrUICC in the terminal when shipped to the retailer. The result is that when the terminal is in the field (i.e. in operational phase, e.g. after having been bought by an end-user or a company), the test events are still available via the test API in this operational phase. An attacker can then download a malicious applet into that terminal, this applet registers on the test event and the attacker can then observe which commands are sent to the non-removable secure element via the test API. This is a security breach.

So, the problem may occur when after mistakenly or maliciously such mechanism remains available in the terminal in operational OS going in the field (the test events have only to be usable during the test of the terminal during the development phase or in the factory, and not when shipped to the retailer).

A solution that could be used to solve this problem is defined by GP (Global Platform): In GP, it is possible to use a signature mechanism to verify the authenticity of a candidate applet to be loaded onto a UICC platform (a platform comprising a SIM application (USIM(s) in 3G) and applications like banking application(s), identity application(s),...). If the applet has not been signed with an authorized key or the applet has an incorrect signature then it would not be able to load onto the UICC platform. Such mechanism is complex to setup (Security Domains need be managed) and would still require changes to standards in order to limit it to specific API (Test Event).

Another solution would be to use a life cycle management mechanism to determine whether the secure element application is operating under test configuration (in factory) or in operational conditions (in the field). Such mechanism would prevent the use of the test events when the secure element application is in operational conditions. However, such mechanism would be much more complex to be secured and will still be vulnerable to a life cycle management mistake. Moreover, using life cycle management is not possible in the scope of maintenance purposes.

The present invention proposes a solution to these problems.

More precisely, the present invention proposes a method for testing a terminal comprising a non-removable secure element comprising a NAA, the method comprising triggering by the operating system of the secure element an applet in the secure element thanks to events if the applet has been registered on the events, the events comprising commands sent from the terminal to the non-removable secure element,
wherein it comprises ciphering the logged information provided in the test events, the ciphering being realized with a key K_ENC derived from the long-term network authentication key K of the NAA.

Preferably, the ciphering is realized with a symmetric encryption algorithm.

Advantageously, the method also comprises verifying in the operating system that the applet presents correctly a key K_SIG1 on registration step that is derived from the long term network authentication key K of the secure element.

Preferably, the method also comprises verifying in the operating system that the applet has been signed by a key K_SIG2 that is derived from the long-term key K of the secure element. The invention will be better understood by reading the following description of a preferred solution for avoiding such an attacker using test events to spy commands from the terminal if test events are accidentally or maliciously present in the terminal when shipped to the retailer (i.e. after the test procedures done during the development phase or in factory). This can also occur during maintenance tests.

The present invention proposes to cipher the logged information provided in the test event to the applet registered to the test events. The applet is beside the OS of the secure element (not part of the OS).

This ciphering is based on a secret key K_ENC, that is derived from the long-term network authentication key K of the currently selected NAA, using an encryption algorithm. This encryption is based on a symmetric algorithm, for example AES (a symmetric encryption algorithm).

The applet comprises this K_ENC and is therefore able to decipher the information logged in the test event to send it to the test equipment. If the applet does not decipher the information, the applet can record the ciphered information and sends it later on to the test equipment that can decipher it off-line. In the latter case, the test equipment comprises this K_ENC.

The invention, by using a key derived from the long-term network authentication key mitigates vulnerability as the operational long-term network authentication key is only known by the network (HSS/AuC or UDM/ARPF) of the MNO and the secure element NAA and well protected in both sides. If a malicious applet is loaded onto the secure element and registers to the test event, it would be only able to capture encrypted data, which it will not be able to decipher even if the malicious applet comprising the K_ENC used in test phases, as operational and test key K are always different, thus derived K_ENC in test environment and operational environment are different.

Furthermore, if the K_ENC encryption key is derived from the long-term network authentication key K by using a hashing function, instead directly the long-term network authentication key K, the long-term network authentication key is not 'weaken' compared to the direct use of the long-term network authentication key for encryption.

In case by mistake such testing operating system is in an operational profile, the long-term network authentication key K would not be known by a malicious applet then logging features is not usable by a malicious applet.

Optionally, the invention consists advantageously in the Operating System to also verify that the applet presents correctly a key K_SIG1 on registration step (API level) that is derived from the long-term network authentication key K of the secure element.

Optionally, the invention consists advantageously in the Operating System to also verify that the loaded applet has been signed by a key K_SIG2 that is derived from the long-term network authentication key K of the secure element. This permits to authenticate the origin of the applet. The secret key K_ENC and/or K_SIG1 and/or K_SIG2, derived from the long term network authentication key K of the secure element, may for instance be the result of a key derivation (e.g. HMAC-SHA 256) of the long-term network authentication key K and a label e.g. "TEST-CONFIGURATION-K_ENC" and respectively "TEST-CONFIGURATION-K_SIG1"/ "TEST-CONFIGURATION-K_SIG2".

The advantages of the invention is that the solution only impacts marginally the Operating System of the UICC platform for the secure element, compared to for instance a secure life cycle management mechanism implemented by an Operating System.

As aforementioned, current state of the art technique to solve the problem is to implement a Life Cycle Management mechanism or GP standard signature verification of the candidate applet. However, that would be too complex for most applications in this segment of the industry. Encrypted information exchange between applications with a pre-shared key exist to protect information in confidentiality. However, this still does not guaranty in case of error in personalization if the shared key is configured independently of the long-term key K, as such shared key could remain accidentally or maliciously in the operational profile.

The invention also applies to the test of the non-removable secure element if the applet also registers the answers of the non-removable secure element to the commands sent by the terminal. The invention is therefore not limited to the test of terminals.

## Claims

1. A method for testing a terminal comprising a non-removable secure element comprising a NAA, said method comprising triggering by the operating system of said secure element an applet of said secure element thanks to events if said applet has been registered on said events, said events comprising commands sent from said terminal to said non-removable secure element,
wherein it comprises ciphering the logged information provided in said test events, said ciphering being realized with a key K_ENC derived from the long-term network authentication key K of said NAA.

2. A method according to claim 1 wherein said ciphering is realized with a symmetric encryption algorithm.

3. A method according to claims 1 or 2 wherein it also comprises verifying in said operating system that said applet presents correctly a key K_SIG1 on registration step that is derived from said long-term network authentication key K of said secure element.

4. A method according to any of the claims 1 to 3 wherein it also comprises verifying in said operating system that said applet has been signed by a key K_SIG2 that is derived from said long-term network authentication key K of said secure element.
